# FASCICULE DE BREVET EUROPEEN

(11) **EP 0 580 877 B1**
(45) Date de publication et mention de la délivrance du brevet: **30.08.1995**
(21) Numéro de dépôt: 91810535.4
(22) Date de dépôt: 08.07.1991
(51) Int. Cl.: G05D 16/20

(54) **Dispositif de régulation de pression**
Vorrichtung zur Druckregelung
Pressure regulator device

(43) Date de publication de la demande: 02.02.1994
(73) Titulaire: HONEYWELL LUCIFER SA, CH-1227 Carouge (Genève) (CH)
(72) Inventeur: Mercier, Claude, F-01630 St-Genis-Pouilly (FR); Livet, Jean, CH-1209 Genève (CH); Prina, Raphael, CH-1258 Perly (CH)
(74) Mandataire: ARDIN & CIE S.A.

(56) Documents cités:
- EP-A- 0 195 890
- EP-A- 0 247 336
- FR-A- 1 400 877
- GB-A- 1 072 988
- US-A- 3 225 557
- US-A- 4 506 700

## Description

On connaît déjà des dispositifs de régulation de pression comprenant une valve à trois voies, à commande électrique, comprenant un corps avec trois orifices pour l'arrivée et respectivement le départ d'un fluide à contrôler, au moins un obturateur coopérant avec ces orifices pour obtenir à volonté la communication entre un orifice correspondant à un dispositif utilisateur et l'un ou l'autre des deux orifices destinés à être relies respectivement à une source de fluide sous pression et à une mise à l'échappement, cet obturateur étant commandé par la pression d'un fluide dans une chambre de commande agissant sur une pièce mobile et contre la force d'un ressort de rappel, la pression du fluide dans la chambre de commande étant contrôlée par un noyau magnétique soumis à l'action d'un ressort de rappel et à l'action d'un champ magnétique produit par une bobine d'excitation.

L'invention a pour but d'améliorer la précision du réglage de la pression du fluide. A cet effet, le dispositif de régulation est caractérisé en ce que la chambre de commande communique d'une part avec l'échappement par un passage contrôlé par ledit noyau magnétique et d'autre part avec l'orifice destiné à être relié au dispositif utilisateur, cette dernière communication présentant un passage de section plus petite que celle du passage contrôlé par le noyau magnétique.

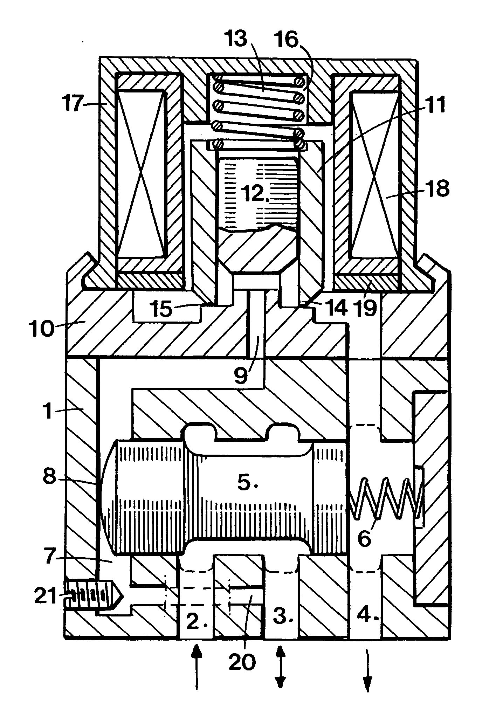

La figure unique du dessin annexé représente, schématiquement et à titre d'exemple, une forme d'exécution de la valve équipant le dispositif selon l'invention, cette valve étant vue en coupe.

Comme le montre le dessin, la valve est à trois voies et comprend un corps 1 avec trois orifices 2, 3 et 4. L'orifice 2 est prévu pour l'amenée d'un fluide sous une pression qui ne doit pas être nécessairement stable. L'orifice 3 est destiné à être relié à un dispositif utilisateur non représenté, qui pourrait être par exemple un vérin de commande d'un organe mécanique. L'orifice 4 est prévu pour le départ du fluide, soit une mise à l'échappement, soit un retour de récupération, selon la nature du fluide.

La communication entre les orifices 2 et 3 et respectivement 3 et 4 est contrôlée par un tiroir 5 poussé vers la gauche par un ressort de rappel 6 ou vers la droite par la pression du fluide régnant dans une chambre de commande 7, cette pression agissant sur la surface d'extrémité 8 du tiroir 5.

La chambre de commande 7 peut être mise à l'échappement par un conduit 9 prévu dans un couvercle 10 du corps 1, cette mise à l'échappement étant contrôlée par un organe obturateur 11 en forme de cylindre évidé et coulissant pratiquement sans jeu sur une portion cylindrique 12. Cet organe obturateur 11, en matière ferromagnétique, est soumis à l'action d'un ressort 13 pour presser son bord inférieur annulaire 14 contre un siège 15, ce qui empêche la communication du conduit 9 avec l'orifice 4 de retour du fluide. L'extrémité supérieure du ressort 13 prend appui contre le fond d'un logement 16 prévu dans un capuchon en matière ferromagnétique 17 fixe sur le couvercle 10.

Le capuchon 17 contient une bobine électrique 18 qui, lorsqu'elle est parcourue par un courant d'excitation, produit un champ magnétique passant par la paroi extérieure du capuchon, la face supérieure de celui-ci, l'organe obturateur 12 et se referme par une rondelle ferromagnétique 19. L'attraction magnétique exercée sur l'organe obturateur 11 soulève ce dernier contre l'action du ressort 13 et l'éloigne du siège 15, ouvrant ainsi la communication entre le conduit 9 et l'orifice 4 de sortie du fluide.

L'amenée de fluide dans la chambre de commande 7 se fait à partir de l'orifice 3 par un conduit 20 qui débouche dans la chambre 7 en regard d'un pointeau à vis 21 permettant de régler à volonté la section du passage d'entrée dans la chambre 7. Cette section doit être plus petite que la section d'ouverture maximale entre l'organe obturateur 11 et son siège 15.

Le dispositif de régulation de pression comprend bien évidemment un dispositif de mesure de pression non représenté, tel qu'un senseur manométrique fournissant un signal électrique indiquant la pression agissant sur l'utilisateur alimenté par l'orifice 3. Ce signal électrique agit sur une unité électronique non représentée qui fournit à la bobine 18 le courant nécessaire pour déplacer l'organe obturateur 11 pour obtenir la pression désirée à la sortie de l'orifice 3. La valve représentée se prête très bien a une commande par courant à impulsions de durée variable, car la faible inertie de l'organe obturateur 11 lui permet de suivre les impulsions de ce courant de commande de la bobine 18, donnant ainsi un réglage instantané et précis de la pression du côté utilisateur.

Grâce au fait que la chambre de commande 7 est alimentée en fluide à la pression stabilisée régnant dans l'orifice 3, la commande du tiroir 5 est aisée et stable, même si la pression d'alimentation dans l'orifice 2 présente des variations importantes.

Enfin, il est clair que le dispositif peut être adapté pour la régulation d'un fluide gazeux ou liquide.

## Revendications

1. Dispositif de régulation de pression comprenant une valve à trois voies, à commande électrique, comprenant un corps (1) avec trois orifices (2,3,4) pour l'arrivée et respectivement le départ d'un fluide à contrôler, au moins un obturateur (5) coopérant avec ces orifices pour obtenir à volonté la communication entre un orifice (3) correspondant à un dispositif utilisateur et l'un (2) ou l'autre (4) des deux orifices destinés à être reliés respectivement à une source de fluide sous pression et à une mise à l'échappement, cet obturateur (5) étant commandé par la pression d'un fluide dans une chambre de commande (7) agissant sur une pièce mobile (8) et contre la force d'un ressort de rappel (6), la pression du fluide dans la chambre de commande (7) étant contrôlée par un noyau magnétique (11) soumis à l'action d'un ressort de rappel (13) et à l'action d'un champ magnétique produit par une bobine d'excitation (18), **caractérisé** en ce que la chambre de commande (7) communique d'une part avec l'échappement (4) par un passage (14,15) contrôlé par ledit noyau magnétique (18) et d'autre part avec l'orifice (3) destiné à être relié au dispositif utilisateur, cette dernière communication présentant un passage de section plus petite que celle du passage contrôlé par le noyau magnétique.

2. Dispositif selon la revendication 1, **caractérisé** en ce que l'obturateur est constitué par un tiroir (5) coulissant dans ledit corps (1).

3. Dispositif selon la revendication 1 ou 2, **caractérisé** en ce que le noyau magnétique (11) est en forme de cylindre creux, un passage (9) faisant communiquer la chambre de commande (7) avec l'intérieur du noyau magnétique cylindrique.

4. Dispositif selon les revendications 1 à 3, **caractérisé** en ce que le passage de plus petite section est ajustable au moyen d'un pointeau réglable (21).

5. Dispositif selon l'une des revendications 1 à 4, **caractérisé** en ce qu'il comprend une unité de commande de la bobine par courant pulsé.

## Patentansprüche

1. Druckregelvorrichtung mit einem elektrisch angetriebenen Dreiwegeventil, das ein Gehäuse (1) mit drei Öffnungen (2, 3, 4) für den zu steuernden Eintritt bzw. Austritt eines Fluids und zumindest einen Verschluss (5) umfasst, der mit diesen Öffnungen zusammenwirkt, um nach Belieben die Verbindung zwischen der einer Verbrauchervorrichtung entsprechenden Öffnung (3) und der einen (2) oder anderen (4) der beiden Öffnungen zu erhalten, die dazu bestimmt sind, mit einer Quelle von Fluid unter Druck bzw. einem Ablass verbunden zu werden, wobei dieser Verschluss (5) von dem gegen die Kraft einer Rückstellfeder (6) auf ein bewegliches Bauteil (8) wirkenden Druck eines Fluids in einer Antriebskammer (7) angetrieben wird und der Fluiddruck in der Antriebskammer (7) durch einen Magnetkern (11) geregelt wird, der unter der Einwirkung einer Rückstellfeder (13) und eines von einer Erregerspule (18) erzeugten Magnetfelds steht, dadurch gekennzeichnet, dass die Antriebskammer (7) einerseits über einen durch den benannten Magnetkern (11) gesteuerten Durchlass (14, 15) mit dem Ablass (4) und andererseits mit der zum Anschluss an die Verbrauchervorrichtung bestimmten Öffnung (3) in Verbindung steht, wobei letztere Verbindung einen Durchlass von engerem Querschnitt darstellt als der durch den Magnetkern gesteuerte Durchlass.

2. Vorrichtung gemäss Anspruch 1, dadurch gekennzeichnet, dass der Verschluss aus einem in dem benannten Gehäuse (1) gleitenden Schieber (5) besteht.

3. Vorrichtung gemäss Anspruch 1 oder 2, dadurch gekennzeichnet, dass der Magnetkern (11) als Hohlzylinder gestaltet ist und ein Durchlass (9) die Antriebskammer (7) mit dem Inneren des zylindrischen Magnetkerns in Verbindung bringt.

4. Vorrichtung gemäss Ansprüchen 1 bis 3, dadurch gekennzeichnet, dass der Durchlass mit dem kleineren Querschnitt durch eine Stellschraube (21) geregelt werden kann.

5. Vorrichtung gemäss einem der Ansprüche 1 bis 4, dadurch gekennzeichnet, dass sie eine Einheit für die Steuerung der Spule durch Impulsströme umfasst.

## Claims

1. Pressure regulator device comprising a valve with three passages, electrically controlled, comprising a body (1) with three openings (2,3,4) for the inlet and outlet respectively of a fluid to be controlled, at least one obturator (5) coacting with these openings to obtain as desired communication between an opening (3) corresponding to an user device and one (2) or the other (4) of the two openings intended to be connected respectively to a source of fluid under pressure and to a discharge, this obturator (5) being controlled by the pressure of a fluid in a control chamber (7) acting on a movable member (8) and against the force of a return spring (6), the pressure of the fluid in the control chamber (7) being controlled by a magnetic core (11) subjected to the action of a return spring (13) and to the action of a magnetic field produced by an excitation winding (18), characterized in that the control chamber (7) communicates on the one hand with the discharge (4) through a passage (14,15) controlled by said magnetic core (11) and on the other hand with the opening (3) intended to be connected to the user device, this latter communication having a passageway of cross section smaller than that of the passageway controlled by the magnetic core.

2. Device according to claim 1, characterized in that the obturator is constituted by a slide member (5) sliding in said body (1).

3. Device according to claim 1 or 2, characterized in that the magnetic core (11) is in the form of a hollow cylinder, a passageway (9) communicating between the control chamber (7) and the interior of the cylindrical magnetic core.

4. Device according to claims 1 to 3, characterized in that the passageway of smaller cross section is adjustable by means of an adjustable needle (21).

5. Device according to one of claims 1 to 4, characterized in that it comprises a control unit of the winding with pulsed current.
